# DEMANDE DE BREVET EUROPEEN

(11) **EP 1 376 367 A2**
(43) Date de publication de la demande: **02.01.2004**
(21) Numéro de dépôt: 03354062.6
(22) Date de dépôt: 26.06.2003
(51) Int. Cl.: G06F 11/36

(54) **Vérification d'intégrité d'un code logiciel exécuté par un processeur intégré**

(30) Priorité: 26.06.2002 FR 0207952
(71) Demandeur: STMicroelectronics S.A., 92120 Montrouge (FR)
(72) Inventeur: Courcambeck, Stéphan, 83270 Saint Cyr sur Mer (FR); Orlando, William, 13790 Peynier (FR)
(74) Mandataire: de Beaumont, Michel

(57) **Abrégé**

L'invention concerne un procédé et un circuit de vérification d'intégrité d'un code logiciel exécuté par un processeur (11), consistant à transférer, par blocs, le code logiciel depuis une mémoire de stockage (2) externe au processeur et à exécuter, en parallèle à l'exécution du code logiciel, un algorithme de vérification de ce code logiciel au moyen d'un circuit dédié (13, 14), distinct dudit processeur d'exécution du code logiciel.

## Description

La présente invention concerne de façon générale l'exécution de programmes (codes logiciels) par un microprocesseur intégré. L'invention concerne plus particulièrement l'exécution d'un code logiciel stocké à l'extérieur (dans une mémoire externe) du processeur intégré, et la vérification de l'intégrité ou de l'authenticité du code logiciel reçu par le processeur pour exécution.

Un exemple d'application de la présente invention concerne les décodeurs de données diverses (par exemple, les décodeurs de signaux numériques de télévision) qui manipulent une clé secrète d'authentification liée au processeur intégré pour exécuter un code logiciel stocké dans une mémoire externe. Plus généralement, l'invention s'applique à tout système (par exemple, des ordinateurs personnels ou PDA) susceptibles d'exécuter des programmes ou applications stockés dans une mémoire externe au processeur intégré, et pour lesquels on souhaite s'assurer de l'authenticité du code logiciel exécuté.

Un problème auquel on se trouve confronté lors de l'exécution d'un code logiciel, stocké dans une mémoire externe à un processeur intégré exécutant ce code, est qu'un utilisateur indélicat ou un pirate est susceptible de remplacer la mémoire externe (son contenu), soit par émulation soit physiquement par remplacement du circuit, afin de faire exécuter par le processeur intégré des programmes non autorisés. De façon symétrique, on peut également assister à des piratages des mémoires externes par des utilisateurs indélicats qui cherchent alors à faire exécuter les codes logiciels par d'autres processeurs intégrés que ceux auxquels ils ont été dédiés.

Pour protéger le code logiciel lors de son exécution, on prévoit classiquement une vérification périodique de ce code à partir d'une clé d'authentification stockée dans la mémoire et/ou dans le circuit intégré, par exemple, lors du stockage initial du programme dans la mémoire externe.

Un inconvénient d'une telle solution est que l'on est généralement contraint à espacer les périodes de vérification afin de ne pas perturber le fonctionnement même du programme. Un tel espacement temporel introduit une fragilité dans le système de vérification dans la mesure où il autorise un basculement synchrone, en cours d'exécution du programme, entre un logiciel pirate et le logiciel valide contenus dans deux mémoires distinctes, le cas échéant avec l'intervention d'un émulateur.

Le code logiciel stocké en mémoire externe peut ou non avoir été stocké par des processus sécurisés contre d'éventuels piratages. L'invention s'applique préférentiellement au cas où le programme est stocké de façon chiffrée dans la mémoire externe au processeur d'exécution et est, lors du stockage, rendu dépendant du processeur d'exécution intégré auquel la mémoire est associée. Dans ce cas, le code logiciel subit, avant son stockage dans la mémoire externe, un premier contrôle d'authenticité, généralement par des procédures asymétriques dites à clé privée et clé publique. Le code logiciel est de plus stocké dans la mémoire en étant chiffré. La clé de ce chiffrement peut être différente de la clé ayant servi à la vérification d'authenticité du programme lors de son contrôle initial.

Parmi les applications de la présente invention, on notera le cas des programmes exécutables téléchargés par un dispositif dans lequel ces programmes doivent être stockés (ordinateur, lecteur de données vidéo et/ou audio, appareil pourvu d'un processeur d'exécution de programmes téléchargeables, etc.). Le téléchargement peut, par exemple, faire appel à l'internet, à des transmissions par satellites de télédiffusion ou à des lignes de télécommunication dédiées.

La présente invention vise à proposer une nouvelle technique de vérification d'intégrité ou d'authenticité d'un code logiciel lors de son exécution, en particulier alors que ce code logiciel est stocké dans une mémoire externe au circuit intégré l'exécutant.

L'invention vise plus particulièrement à proposer une solution qui permette une vérification intégrale et parallèle du code sans perturber le fonctionnement de l'application.

L'invention vise également à proposer une solution qui soit compatible avec un chiffrement du code logiciel lors d'un stockage initial dans la mémoire externe.

L'invention vise également à proposer une solution qui ne permette pas un piratage du code logiciel par détection de périodicité de la vérification.

L'invention vise également à permettre une vérification d'un code logiciel d'initialisation du processeur intégré lors de son démarrage.

L'invention vise également à proposer une solution qui soit compatible avec un accès direct aléatoire à la mémoire externe.

Pour atteindre ces objets et d'autres, la présente invention prévoit un circuit intégré d'exécution d'un code logiciel stocké dans une mémoire externe à ce circuit intégré et comprenant :
un processeur d'exécution de ce code logiciel ;
un circuit dédié, distinct du processeur d'exécution, pour contrôler bloc par bloc l'intégrité du code logiciel stocké dans la mémoire externe, au fur et à mesure de sa lecture pour exécution ; et
une mémoire cache de stockage temporaire du code logiciel pour utilisation par le processeur d'exécution et/ou par ledit circuit dédié.

Selon un mode de réalisation de la présente invention, le circuit intégré comporte un circuit de chiffrement/déchiffrement du code logiciel à partir d'une clé secrète propre au circuit intégré.

Selon un mode de réalisation de la présente invention, le circuit intégré comporte en outre un contrôleur d'accès mémoire direct pour gérer les accès à un bus mémoire de communication entre le circuit intégré et la mémoire externe, ledit contrôleur transférant le code logiciel, bloc par bloc, lorsque ce bus n'est pas utilisé par le processeur d'exécution.

Selon un mode de réalisation de la présente invention, ladite mémoire externe est une mémoire à double accès, un premier accès étant dédié au processeur d'exécution tandis qu'un deuxième accès est dédié au circuit de contrôle d'intégrité.

Selon un mode de réalisation de la présente invention, ledit circuit dédié de contrôle d'intégrité est constitué d'une machine d'états en logique câblée.

Selon un mode de réalisation de la présente invention, ledit circuit dédié de contrôle d'intégrité est un processeur secondaire distinct du processeur d'exécution.

Selon un mode de réalisation de la présente invention, les blocs de code logiciel sont lus dans la mémoire externe pendant des périodes où ledit processeur d'exécution n'a pas besoin d'accéder à un bus mémoire partagé.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon très schématique et sous forme de blocs, un mode de réalisation d'un circuit intégré contenant un processeur et les circuits pour la mise en oeuvre du procédé selon la présente invention ; et
la figure 2 représente partiellement, toujours sous forme de blocs et de façon très schématique, un deuxième mode de réalisation d'un circuit intégré d'exécution de code logiciel et de vérification d'authenticité selon la présente invention.

Les mêmes éléments ont été désignés par les mêmes références aux différentes figures. Pour des raisons de clarté, seuls les étapes de procédé et les éléments des circuits qui sont nécessaires à la compréhension de l'invention ont été représentés aux figures et seront décrits par la suite. En particulier, les traitements exécutés par le processeur concernant le code logiciel lui-même n'ont pas été détaillés et ne font pas l'objet de la présente invention. Celle-ci s'applique quelle que soit la finalité du code logiciel dont on vérifie l'authenticité en cours d'exécution selon l'invention. De plus, les procédés de chiffrement et de déchiffrement proprement dits n'ont pas été détaillés dans la mesure où l'invention peut être mise en oeuvre avec n'importe quel procédé de chiffrement à clé secrète comme cela sera explicité par la suite.

Une caractéristique de la présente invention est d'utiliser un élément distinct du processeur intégré pour vérifier l'intégrité du code logiciel exécuté par celui-ci, cet élément distinct étant dédié à une telle vérification. Une autre caractéristique de la présente invention est de transférer le code logiciel, par blocs, depuis la mémoire externe vers l'élément de vérification, sans recourir au processeur d'exécution de ce code. Pour cela, le bus mémoire de transfert de données et d'adresses, utilisé par le processeur d'exécution, ne doit pas être utilisé pour transférer des blocs de code logiciel à vérifier lorsque ce processeur d'exécution a besoin de ce bus pour accéder à la mémoire.

Une première solution serait de transférer l'intégralité du code logiciel depuis sa mémoire de stockage (par exemple, une mémoire externe) vers une mémoire intégrée au processeur. Une telle solution est en pratique irréaliste en raison de la taille rédhibitoire de la mémoire qu'il serait alors nécessaire d'intégrer avec le processeur d'exécution.

Pour gérer le bus mémoire partagé sans nuire à l'exécution du code logiciel par le processeur d'exécution, on utilise préférentiellement un contrôleur d'accès mémoire direct (contrôleur DMA). Un tel contrôleur est ici utilisé pour sa fonction de contrôle du bus partagé. De façon parfaitement classique, un contrôleur DMA prend la main sur le bus mémoire de façon transparente pour le processeur d'exécution du code logiciel lorsque le processeur n'en a pas besoin.

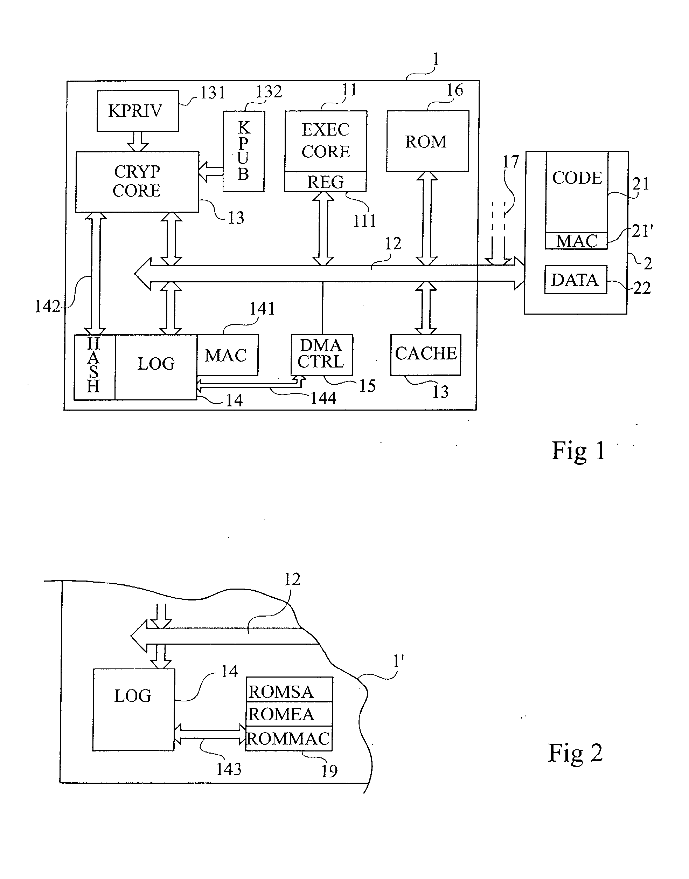

La figure 1 représente, de façon très schématique et sous forme de blocs, un mode de réalisation d'un circuit intégré 1 selon l'invention, adapté à la mise en oeuvre du procédé de vérification d'intégrité d'un code logiciel stocké dans une mémoire 2 externe au circuit intégré 1.

Le code logiciel est stocké dans un segment ou bloc mémoire (bloc 21, CODE) de la mémoire 2 qui contient, entre autres, également un autre segment (bloc 22, DATA) pour le stockage des données traitées. La mémoire externe 2 contient également dans le segment 21 ou dans une autre partie (bloc 21', MAC) un ou plusieurs codes d'authentification de message (Message Authentication Code) ou une ou plusieurs signatures des blocs du programme stockés dans le segment 21 pour en permettre l'authentification, au fur et à mesure de leur exécution, par le circuit intégré 1. Un code MAC est le résultat d'un algorithme appliqué à un flux de données en tenant compte d'une clé. Une signature est le résultat d'un algorithme de hashage appliqué à un flux de données sans tenir compte d'une clé, mais chiffré en sortie par une clé généralement symétrique.

Comme on le verra par la suite, le code logiciel stocké dans la mémoire 2 peut être stocké de façon chiffrée en utilisant une clé propre au circuit intégré 1. Le chiffrement du code logiciel lui-même s'effectue alors préférentiellement après avoir décrypté l'application lors de son installation alors que celle-ci est cryptée au moyen d'une autre clé.

Côté circuit intégré 1, celui-ci comprend pour la mise en oeuvre de l'invention, un processeur d'exécution du code logiciel (bloc 11, EXEC CORE) associé à un registre d'entrée-sortie 111 (REG) connecté à un bus 12 partagé par les circuits inclus dans le circuit intégré 1. Le bus 12 est un bus mémoire et communique donc avec la mémoire 2 externe au circuit intégré. Pour simplifier, un seul bus 12 a été représenté. On notera toutefois que la mémoire 12 comprend également un bus d'adresse communiquant avec le circuit 1 pour aller chercher les données (code logiciel à exécuter ou données proprement dites) dans les zones appropriées de celle-ci et que des bus de commande appropriés relient les différents éléments.

Le circuit 1 comporte également une mémoire cache 18 (CACHE) communiquant avec le bus 12. Le rôle de la mémoire cache est, de façon classique, de stocker les lignes de code logiciel à exécuter alors que ces lignes de code sont transférées, par blocs, depuis la mémoire externe 2. Un circuit de chiffrement 13 (CRYP CORE) associé à des éléments de mémorisation (par exemple, des registres ou analogues) d'une clé privée (bloc 131, KPRIV) propre au circuit intégré 1 et d'une ou plusieurs clés publiques (blocs 132, KPUB) est, selon ce mode de réalisation de l'invention, prévu dans le circuit 1 pour chiffrer/déchiffrer le code logiciel contenu dans la mémoire 2. Comme on le verra par la suite, le circuit 13 sert non seulement lors de l'installation du programme téléchargé depuis l'extérieur du système mais également lors de l'exécution de ce code pour la vérification d'intégrité propre à l'invention. Le circuit de chiffrement 13 communique avec le bus 12 et est constitué, préférentiellement, d'une machine d'états en logique câblée. En variante, il pourra toutefois s'agir d'un processeur, de préférence, distinct du processeur 11.

Selon une caractéristique de la présente invention, le circuit 1 comprend également un élément 14 (LOG, HASH) de vérification d'intégrité du code logiciel en cours d'exécution. Le circuit 14 est, selon le mode de réalisation préféré illustré par la figure 1, constitué d'une machine d'états en logique câblée communiquant avec le bus 12. En variante, il pourra s'agir d'un processeur dédié à cette fonction et distinct du processeur 11 d'exécution du code logiciel. L'élément 14 est associé à un registre 141 de stockage temporaire du code MAC ou de la signature du bloc de code logiciel en cours d'authentification, ou d'une table de codes MAC ou de signatures des blocs du code logiciel. Le circuit 14 communique également directement avec le circuit 13 et met en oeuvre une fonction de cryptographie, de préférence une fonction dite de Hash, classique en elle-même. Dans le cas d'un contrôle par code MAC, le circuit 14 contient en outre une clé (non représentée) propre au circuit intégré. Dans le cas d'un contrôle par signature, on utilise la clé KPRIV du registre 131.

Selon le mode de réalisation représenté de l'invention, le circuit 1 intègre en outre un contrôleur DMA 15 (DMA CTRL) chargé de gérer les échanges sur le bus mémoire 12, et une mémoire morte (bloc 16, ROM) contenant, par exemple, le code logiciel d'initialisation du circuit 1.

D'autres constituants classiques équipent le circuit 1 en fonction de l'application. Ces constituants n'ont pas été représentés et ne font pas l'objet de l'invention. Celle-ci s'applique quelle que soit la destination du circuit intégré 1 pourvu que celui-ci ait pour fonction d'exécuter un code logiciel stocké dans une mémoire externe 2, dont on souhaite contrôler l'intégrité lors de l'exécution.

On décrira ci-après un exemple de mise en oeuvre du procédé selon l'invention pour l'installation d'un programme ou code logiciel, c'est-à-dire son chiffrement avant stockage dans le segment 21 de la mémoire 2, sur la base de la clé KPRIV propre au circuit intégré 1.

On suppose, par exemple, que l'application est téléchargée depuis un fournisseur externe au circuit intégré. Il s'agira, par exemple, d'un téléchargement par Internet ou d'un téléchargement par canaux de télédiffusion satellite ou analogue. Ce téléchargement est symbolisé en figure 1 par un accès 17 sur le bus mémoire 12.

Selon un premier mode de mise en oeuvre, le code logiciel à stocker est téléchargé avec sa signature (cryptée par le fournisseur de l'application sur la base d'une clé privée). Le cryptage a été effectué sur la base d'un algorithme asymétrique (par exemple, une fonction de Hash) basé sur un envoi de clé par le fournisseur ou par le circuit 1 selon la clé avec laquelle est crypté le code logiciel. Dans l'exemple de la figure 1, on suppose que le circuit 1 reçoit une clé publique KPUB (bloc 132) du fournisseur ayant crypté le code applicatif. Cette clé KPUB sert alors au circuit 13 pour décoder l'application cryptée, qu'elle soit lue dans la mémoire 2 après un téléchargement en blocs ou décryptée en temps réel par un téléchargement par un bus 17. En variante, on utilise un algorithme symétrique, la clé KPUB servant alors à déchiffrer une clé de décryptage de l'algorithme symétrique. Jusque là, le circuit 1 exécute des étapes classiques de décryptage d'un programme crypté par un algorithme à clés privée et publique.

Le programme d'installation (par exemple stocké dans la mémoire morte 16) fournit au circuit 14 de contrôle d'intégrité les adresses de départ et de fin, dans la mémoire 2, du code logiciel à décrypter pour installation et à stocker chiffré. On suppose ici que l'application à installer a donc au préalable été stockée dans la mémoire 2. Le circuit 14 envoie alors une requête au contrôleur DMA pour extraire le contenu de la mémoire 2 entre ces adresses. Par ailleurs, la signature cryptée (par exemple, contenue dans le segment 21') de l'application est envoyée au circuit 13 de chiffrement/déchiffrement qui décrypte cette signature en utilisant la clé KPUB. On notera que la clé KPUB peut transiter en clair sur le bus 12 dans la mesure où il s'agit ici d'une clé publique. Par contre, une fois décryptée, la signature du code logiciel transite, vers le circuit 14, par une liaison dédiée 142.

Le circuit 14 calcule alors le résultat de la fonction de Hash appliquée au code logiciel qui lui est fourni sous contrôle du contrôleur DMA 15, et le compare au résultat de la signature décryptée par le circuit 13. Si les résultats sont identiques, le système (plus précisément, le programme d'installation) autorise l'installation de l'application qui est alors mémorisée dans la mémoire 2. Dans le cas contraire, il met en oeuvre les procédures habituelles de rejet d'une application non autorisée (par exemple, effacement de la zone mémoire correspondante).

Dans une deuxième phase d'installation, le code logiciel peut être chiffré avec la clé privée KPRIV de la puce de circuit intégré avant de le stocker dans la mémoire 2. La clé KPRIV est alors préférentiellement une clé propre à la puce. Par exemple, il s'agit d'un code binaire issu au moins partiellement d'un réseau de paramètres physiques lié au circuit intégré. En variante, il s'agit d'une clé d'un algorithme symétrique.

En pratique, les première et deuxième phases d'installation peuvent être imbriquées.

Le programme est installé entre des adresses de départ et de fin dans le segment 21 de la mémoire 2. Le découpage du programme par blocs, préférentiellement de tailles identiques, s'effectue lors de cette deuxième phase d'installation. Ce découpage est prévu dans le programme d'installation de même que l'ajout d'instructions éventuelles d'initialisation et de contrôle classiques. Les adresses de début et de fin de chaque bloc sont stockées dans une zone spécifique de la mémoire 2. On commence alors par lire cette zone de la mémoire et à envoyer des adresses de début et de fin au circuit logique 14 qui fournit une requête au contrôleur DMA 15 pour lire le segment 21 de la mémoire 2 entre ces deux adresses. Le circuit 14 calcule (après un éventuel décryptage s'il n'a pas été fait séparément) le résultat d'une fonction de Hash appliquée au code ou au bloc de code lu et envoie le résultat (signature) au circuit de chiffrement 13 pour qu'il soit chiffré avec la clé privée KPRIV (ou une autre clé). Le résultat chiffré constitue le code MAC du bloc et est transféré, par le bus 12, dans la mémoire externe 2, pour enregistrement dans le segment 21', tandis que les lignes du bloc de code logiciel chiffré par la clé KPRIV sont stockées dans le segment 21.

Déjà lors de l'installation, le recours au contrôleur DMA permet d'exécuter toutes les fonctions de chiffrement sans utiliser de temps de cycle du processeur d'exécution 11. En particulier, on autorise le circuit logique 14 à fournir une requête au contrôleur DMA pour lire le contenu de la mémoire externe 2 entre des adresses définies par une table d'adresses liée à l'application et téléchargée par le fournisseur d'application.

Bien entendu, dans toute l'installation, on utilise la mémoire cache 18 pour les transferts. Cette utilisation et les commandes nécessaires sont à la portée de l'homme du métier à partir des indications fonctionnelles données ci-dessus.

Une fois le code logiciel installé en étant chiffré et associé à des codes MAC par blocs (groupe d'instructions), il peut, selon l'invention, être contrôlé à chacune de ses exécutions de la façon suivante.

A chaque lancement du programme, la table des adresses de début et de fin des blocs chiffrés est lue et stockée, soit dans des registres associés au circuit 14, soit dans la mémoire cache 18.

Selon un premier mode de mise en oeuvre, à chaque instruction, le circuit 14 vérifie le pointeur du processeur d'exécution 11 pour déterminer si le bloc de code logiciel lu en mémoire cache 18 a déjà ou non été vérifié. Dans la négative, il envoie une requête au contrôleur DMA de lire le bloc contenant l'instruction qui l'intéresse dans la mémoire 2 ainsi que le code MAC ou la signature correspondant. Ce code MAC ou cette signature est stocké dans le registre 141 et le contrôleur 15 transfère le bloc séquentiellement au circuit 14 en parallèle à son stockage en mémoire cache 18 pour mise à disposition du processeur d'exécution. Dans le cas de codes MAC, le circuit 14 fournit directement un signal d'authentification en comparant le code calculé au code MAC attendu. Dans le cas d'une signature, le circuit 14 calcule la fonction de Hash sur l'ensemble du bloc et transfère le résultat obtenu au circuit 13 (par la liaison directe 142). Ce dernier chiffre cette signature au moyen de la clé privée KPRIV et retourne le résultat chiffré au circuit 14. Celui-ci compare alors ce résultat chiffré à la signature attendue contenue dans son registre 141. En cas d'identité, le processeur d'exécution 11 est autorisé à poursuivre. Sinon, un signal de défaut d'intégrité lui est envoyé.

Le circuit logique 14 est préférentiellement une machine d'états en logique câblée en roue libre c'est-à-dire, qu'il est en condition de fonctionnement permanente.

Selon un deuxième mode de mise en oeuvre, le processeur 11 sait qu'il débute un nouveau bloc du code applicatif et déclenche alors la vérification. Le processeur 11 fournit alors une adresse de début et une adresse de fin ainsi que la taille du bloc au circuit 14. La lecture dans la mémoire 2 s'effectue toujours sans recours au processeur 11 grâce au contrôleur DMA 15 qui fournit alors le bloc correspondant au circuit logique 14.

Selon une variante de réalisation, on prévoit une temporisation par rapport à chaque changement de position du pointeur courant dans le processeur d'exécution 11, ou une temporisation par rapport à chaque changement de bloc détecté par celui-ci.

On peut également prévoir d'espionner le bus d'adresses pour déterminer l'apparition d'une instruction provenant d'un bloc non vérifié.

Selon le mode de réalisation préféré de l'invention, les codes MAC ou signatures sont, lors de l'installation, stockés dans une table séparée (segment 21') de la mémoire 2. Le contrôleur 15 lit alors, à chaque début ou fin de bloc qu'il transfère en mémoire cache 18 et qu'il soumet au circuit 14, le code MAC ou la signature du bloc concerné et stocke ce code dans le registre 141.

On notera que le code MAC ou la signature est chiffré par la puce de circuit intégré lors de l'installation et est donc différent de puce à puce. Sur le bus mémoire 12, les codes applicatifs restent chiffrés. Dans le cas d'une signature, ceci est rendu possible par l'utilisation d'une liaison spécifique 142 entre le circuit logique 14 et le coeur de chiffrement 13. Un avantage est alors que la signature du bloc de code logiciel n'est pas piratable par espionnage du bus mémoire 12.

La taille des blocs du code applicatif traité par le circuit logique 14 dépend de l'application et entre autres, du taux de transfert du contrôleur DMA et du temps de contrôle nécessaire au circuit 14. Plus le bloc mémoire est petit, plus il sera nécessaire d'accéder souvent à la mémoire 2 donc de réclamer des accès au bus par le contrôleur DMA 15. Toutefois, comme celui-ci gère le bus mémoire 12 afin de l'utiliser lorsqu'il ne l'est pas par le processeur 11, cela n'est pas forcément gênant.

Pour la mise en oeuvre du procédé de l'invention, on doit notamment équiper le circuit 1 des éléments suivants :
une liaison (144) dédiée entre le contrôleur DMA 15 et le circuit 14 qui ne soit pas accessible au processeur d'exécution 11 ; et
dans le cas d'un contrôle par signature, une liaison dédiée (142) entre le circuit 14 et le circuit 13, de façon que la fonction de Hash n'apparaisse jamais clairement sur le bus de données 12. Cette liaison n'est pas nécessaire en cas de contrôle par code MAC.

La figure 2 illustre une variante de réalisation d'un circuit intégré 1 selon l'invention adapté pour vérifier également, au moyen du circuit 14, l'intégrité du programme de démarrage ou d'initialisation du circuit 1 (boot).

La figure 2 ne représente que partiellement le circuit 1. On s'est contenté de représenter le circuit logique 14 (LOG) et la liaison directe 143 qu'il possède, selon ce mode de réalisation, avec une table mémoire 19 (par exemple, des registres). Le circuit 14 charge sur une ligne dédiée (non représentée) les paramètres internes de la ROM depuis une zone de la mémoire morte 16 qui lui est dédiée et qui contient l'adresse de début en ROM 16 du programme de démarrage (ROMSA), l'adresse de fin (ROMEA) du programme de démarrage ainsi qu'un code MAC (ROMMAC) ou une signature du programme stocké en ROM. Le circuit 14 envoie ensuite une requête au contrôleur DMA 15 pour lire le contenu de la mémoire 16 entre les adresses de début et de fin. Dans le cas d'un contrôle par signature, il applique une fonction de Hash à ce contenu et fournit le résultat au circuit 13 de chiffrement. Le circuit 13 chiffre le résultat (signature) de la fonction de Hash en utilisant la clé privée KPRIV contenue dans le registre 131 et fournit le résultat chiffré au circuit 14. Celui-ci vérifie alors que ce résultat chiffré correspond à la signature attendue. Dans l'affirmative, il autorise le lancement du programme. Dans la négative, il exécute les fonctions de blocage habituelles. Le cas échéant, le programme d'initialisation est découpé en blocs (selon sa longueur). Dans le cas d'un contrôle par code MAC, le circuit 14 vérifie l'identité entre un code MAC qu'il calcule et le code ROMMAC attendu.

Pour la mise en oeuvre du mode de réalisation de la figure 2, on doit équiper le circuit 1 (en plus des éléments décrits en relation avec la figure 1), notamment d'une ligne dédiée (non représentée) entre la table stockant les paramètres internes de la mémoire morte et le circuit 14. Le contrôleur mémoire 15 permet au circuit 14 d'accéder à la mémoire morte 16 sans recourir au processeur 11.

De préférence, le circuit 14 dispose d'un moyen pour empêcher, de façon matérielle, l'exécution du code s'il détecte un défaut d'intégrité.

De préférence, pour ne par ralentir l'exécution du programme, on autorise celle-ci pendant les calculs d'intégrité effectués en parallèle. Toutefois, il faut alors s'assurer que le code MAC ou la signature soit fourni dans un délai raisonnable (par rapport aux capacités de piratage). On pourra, par exemple, recourir à une temporisation, ou interdire toute interruption du canal du contrôleur DMA utilisé pour la vérification.

Bien entendu, la présente invention est susceptible de diverses variantes et modifications qui apparaîtront à l'homme de l'art. En particulier, la mise en oeuvre pratique de l'invention est à la portée de l'homme de l'art à partir des indications fonctionnelles données ci-dessus. De plus, ce qui a été exposé en relation avec un contrôleur DMA pourra être transposé à une mémoire à double accès ou à une mémoire équipée de son propre contrôleur. Par exemple, dans le cas d'une mémoire double accès, un accès sera réservé au coeur 11 du processeur tandis qu'un accès sera réservé au circuit logique 14 de vérification d'intégrité.

En outre, le choix des algorithmes de cryptage ou de chiffrement/déchiffrement ainsi que de la fonction de Hash est à la portée de l'homme du métier à partir des indications fonctionnelles données ci-dessus et des algorithmes connus. Bien entendu, la fonction de Hash mise en oeuvre par le circuit 14 lors du contrôle d'intégrité et la fonction de chiffrement mise en oeuvre par le circuit 13 doivent être compatibles avec celles mises en oeuvre lors de l'installation. Par exemple, on pourra se référer aux ouvrages habituels relatifs à la cryptographie pour sélectionner les fonctions souhaitées (voir l'ouvrage de Bruce Schneier "Cryptographie appliquée", paru aux éditions WILEY, ISBN 2-84-180-036-9).

Enfin, la réalisation d'un circuit intégré pourvu d'un contrôleur DMA conforme au mode de réalisation préféré de l'invention pourra s'inspirer, par exemple, du brevet américain 4 240 138.

## Revendications

1. Circuit intégré d'exécution d'un code logiciel stocké dans une mémoire (2) externe à ce circuit intégré et comprenant un processeur (11) d'exécution de ce code logiciel, **caractérisé en ce qu'**il comporte :
un circuit dédié (14), distinct du processeur d'exécution, pour contrôler bloc par bloc l'intégrité du code logiciel stocké dans la mémoire externe, au fur et à mesure de sa lecture pour exécution ; et
une mémoire cache (18) de stockage temporaire du code logiciel pour utilisation par le processeur d'exécution et/ou par ledit circuit dédié.

2. Circuit selon la revendication 1, comportant un circuit de chiffrement/déchiffrement (13) du code logiciel à partir d'une clé secrète (KPRIV) propre au circuit intégré.

3. Circuit selon la revendication 1 ou 2, comportant en outre un contrôleur d'accès mémoire direct (15) pour gérer les accès à un bus mémoire (12) de communication entre le circuit intégré (1) et la mémoire externe (2), ledit contrôleur transférant le code logiciel, bloc par bloc, lorsque ce bus n'est pas utilisé par le processeur d'exécution (11).

4. Circuit selon la revendication 1 ou 2, dans lequel ladite mémoire externe (2) est une mémoire à double accès, un premier accès étant dédié au processeur d'exécution (11) tandis qu'un deuxième accès est dédié au circuit (14) de contrôle d'intégrité.

5. Circuit selon l'une quelconque des revendications 1 à 4, dans lequel ledit circuit dédié (14) de contrôle d'intégrité est constitué d'une machine d'états en logique câblée.

6. Circuit selon l'une quelconque des revendications 1 à 4, dans lequel ledit circuit dédié de contrôle d'intégrité est un processeur secondaire distinct du processeur d'exécution (11).

7. Circuit selon l'une quelconque des revendications 1 à 6, dans lequel les blocs de code logiciel sont lus dans la mémoire externe (2) pendant des périodes où ledit processeur d'exécution (11) n'a pas besoin d'accéder à un bus mémoire partagé (12).
